# EUROPEAN PATENT APPLICATION

(11) **EP 2 378 752 A2**
(43) Date of publication of application: **19.10.2011**
(21) Application number: 11002595.4
(22) Date of filing: 29.03.2011
(51) Int. Cl.: H04M 1/725, G06F 3/048

(54) **Mobile terminal and method of controlling operation of the mobile terminal**

(30) Priority: 19.04.2010 KR 20100035985
(71) Applicant: LG ELECTRONICS INC., Yeongdeungpo-gu Seoul 150-721 (KR)
(72) Inventor: Yoo, Mijun, Seoul 153-023 (KR); Kang, Hyunho, Seoul 153-023 (KR); Kim, Hanbee, Seoul 153-023 (KR); Park, Jisoon, Seoul 153-023 (KR)
(74) Representative: Beyer, Andreas

(57) **Abstract**

A mobile terminal and a method of controlling the operation of the mobile terminal are discussed. The method includes selecting a multimedia file to be played; displaying a progress bar having an animated character on a display module; and moving the animated character across the progress bar according to the progress of the playback of the selected multimedia file. Therefore, it is possible to effectively visualize the progress of the playback of the selected multimedia file by using the animated character.

## Description

### CROSS-REFERENCE TO RELATED APPLICATION

This application claims the priority benefit of Korean Patent Application No. 10-2010-0035985, filed on April 19, 2010 in the Korean Intellectual Property Office, the disclosure of which is incorporated herein by reference.

### BACKGROUND OF THE INVENTION

### 1. Field of the Invention

The present invention relates to a mobile terminal and a method of controlling the operation of the mobile terminal, and more particularly, to a mobile terminal and a method of controlling the operation of the mobile terminal, which can effectively inform a user of the progress of the operation of the mobile terminal or the state of the control of the mobile terminal using an animated character.

### 2. Description of the Related Art

Mobile terminals are portable devices, which can provide users with various services such as a voice calling service, a video calling service, an information input/output service, and a data storage service.

As the types of services provided by mobile terminals diversify, an increasing number of mobile terminals have been equipped with various complicated functions such as capturing photos or moving pictures, playing music files or moving image files, providing game programs, receiving broadcast programs and providing wireless internet services and have thus evolved into multimedia players.

Various attempts have been made to realize such complicated functions as hardware devices or software programs. For example, various user interface (UI) environments, in which users are allowed to easily search for and choose desired functions, have been developed. In addition, the demand for various designs for mobile terminals has steadily grown due to a growing tendency of considering mobile terminals as personal items that can represent personal individuality.

In the meantime, progress bars are generally used to indicate the progress of the operation of mobile terminals such as the playback of multimedia data. In operating modes of mobile terminals that require volume control, a volume level is generally indicated by text or a graph.

However, in order to meet various demands from users, a method is needed to help users intuitively understand the progress of the operation of mobile terminals or the state of control of mobile terminals by using a new tool, other than a progress bar, text or a graph.

### SUMMARY OF THE INVENTION

The present invention provides a mobile terminal and a method of controlling the operation of the mobile terminal, which can help a user intuitively understand the progress of the operation of the mobile terminal and the state of the control of the mobile terminal by using an animated character.

According to an aspect of the present invention, there is provided a method of controlling the operation of a mobile terminal, the method including selecting a multimedia file to be played; displaying a progress bar having an animated character on a display module; and moving the animated character across the progress bar according to the progress of the playback of the selected multimedia file.

According to another aspect of the present invention, there is provided a mobile terminal including a display module configured to display an operation screen thereon; and a controller configured to display a progress bar having an animated character on the display module upon the selection of a multimedia file to be played and to move the animated character across the progress bar according to the progress of the playback of the multimedia file.

According to another aspect of the present invention, there is provided a method of controlling the operation of a mobile terminal, the method including if an operating mode that requires volume control is selected, displaying an operation screen relevant to the selected operating mode; displaying an animated character representing a volume level on the operation screen; and changing at least one of the location of the animated character and the pattern of the movement of the animated character in accordance with a variation in the volume level.

According to another aspect of the present invention, there is provided a mobile terminal including a display module configured to, if an operating mode that requires volume control is selected, display an operation screen relevant to the selected operating mode thereon; and a controller configured to display an animated character representing a volume level on the operation screen and changing at least one of the location of the animated character and the pattern of the movement of the animated character in accordance with a variation in the volume level.

### BRIEF DESCRIPTION OF THE DRAWINGS

The above and other features and advantages of the present invention will become more apparent by describing in detail preferred embodiments thereof with reference to the attached drawings in which:
FIG. 1 is a block diagram of a mobile terminal according to an exemplary embodiment of the present invention;
FIG. 2 is a front perspective view of the mobile terminal shown in FIG. 1;
FIG. 3 is a rear perspective view of the mobile terminal shown in FIG. 2;
FIG. 4 is a flowchart of a method of controlling a mobile terminal, according to an exemplary embodiment of the present invention;
FIG. 5 is a flowchart of a method of controlling a mobile terminal, according to another exemplary embodiment of the present invention; and
FIGS. 6 through 8 are diagrams illustrating examples of the use of an animated character in a multimedia player mode according to exemplary embodiments of the present invention; and
FIGS. 9 through 12 are diagrams illustrating examples of the use of an animated character in volume control according to exemplary embodiments of the present invention.

### DETAILED DESCRIPTION OF THE INVENTION

The present invention will hereinafter be described in detail with reference to the accompanying drawings in which exemplary embodiments of the invention are shown.

The term 'mobile terminal', as used herein, may indicate a mobile phone, a smart phone, a laptop computer, a digital broadcast receiver, a personal digital assistant (PDA), a portable multimedia player (PMP), a navigation device, a tablet computer, or an electronic book (e-book) reader. In this disclosure, the terms 'module' and 'unit' can be used interchangeably.

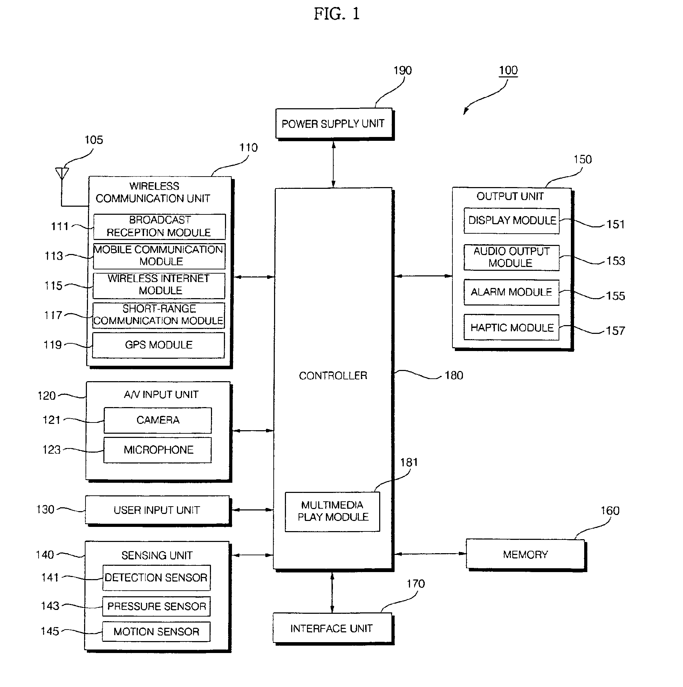

FIG. 1 is a block diagram of a mobile terminal 100 according to an embodiment of the present invention. Referring to FIG. 1, the mobile terminal 100 may include a wireless communication unit 110, an audio/video (A/V) input unit 120, a user input unit 130, a sensing unit 140, an output unit 150, a memory 160, an interface unit 170, a controller 180, and a power supply unit 190. Two or more of the wireless communication unit 110, the A/V input unit 120, the user input unit 130, the sensing unit 140, the output unit 150, the memory 160, the interface unit 170, the controller 180, and the power supply unit 190 may be incorporated into a single unit, or some of the wireless communication unit 110, the A/V input unit 120, the user input unit 130, the sensing unit 140, the output unit 150, the memory 160, the interface unit 170, the controller 180, and the power supply unit 190 may be divided into two or more smaller units.

The wireless communication unit 110 may include a broadcast reception module 111, a mobile communication module 113, a wireless internet module 115, a short-range communication module 117, and a global positioning system (GPS) module 119. The broadcast reception module 111 may receive a broadcast signal and/or broadcast-related information from an external broadcast management server through a broadcast channel. The broadcast channel may be a satellite channel or a terrestrial channel. The broadcast management server may be a server which generates broadcast signals and/or broadcast-related information and transmits the generated broadcast signals and/or the generated broadcast-related information or may be a server which receives and then transmits previously-generated broadcast signals and/or previously-generated broadcast-related information.

The broadcast-related information may include broadcast channel information, broadcast program information and/or broadcast service provider information. The broadcast signal may be a TV broadcast signal, a radio broadcast signal, a data broadcast signal, the combination of a data broadcast signal and a TV broadcast signal or the combination of a data broadcast signal and a radio broadcast signal. The broadcast-related information may be provided to the mobile terminal 100 through a mobile communication network. In this case, the broadcast-related information may be received by the mobile communication module 113, rather than by the broadcast reception module 111. The broadcast-related information may come in various forms. For example, the broadcast-related information may be electronic program guide (EPG) of digital multimedia broadcasting (DMB) or may be electronic service guide (ESG) of digital video broadcast-handheld (DVB-H).

The broadcast reception module 111 may receive the broadcast signal using various broadcasting systems such as digital multimedia broadcasting-terrestrial (DMB-T), digital multimedia broadcasting-satellite (DMB-S), media forward link only (MediaFLO), DVB-H, and integrated services digital broadcast-terrestrial (ISDB-T). In addition, the broadcast reception module 111 may be configured to be suitable for nearly all types of broadcasting systems other than those set forth herein. The broadcast signal and/or the broadcast-related information received by the broadcast reception module 111 may be stored in the memory 160.

The mobile communication module 113 may transmit wireless signals to or receives wireless signals from at least one of a base station, an external terminal, and a server through a mobile communication network. The wireless signals may include various types of data according to whether the mobile terminal 100 transmits/receives voice call signals, video call signals, or text/multimedia messages.

The wireless internet module 115 may be a module for wirelessly accessing the internet. The wireless internet module 115 may be embedded in the mobile terminal 100 or may be installed in an external device. The wireless internet module 115 may be embedded in the mobile terminal 100 or may be installed in an external device. The wireless internet module 115 may use various wireless internet technologies such as wireless local area network (WLAN), Wireless Broadband (WiBro), World Interoperability for Microwave Access (Wimax), and High Speed Downlink Packet Access (HSDPA).

The short-range communication module 117 may be a module for short-range communication. The short-range communication module 117 may use various short-range communication techniques such as Bluetooth, radio frequency identification (RFID), infrared data association (IrDA), ultra wideband (UWB), and ZigBee.

The GPS module 119 may receive position information from a plurality of GPS satellites.

The A/V input unit 120 may be used to receive audio signals or video signals. The A/V input unit 120 may include a camera 121 and a microphone 123. The camera 121 may process various image frames such as still images or moving images captured by an image sensor during a video call mode or an image capturing mode. The image frames processed by the camera 121 may be displayed by a display module 151.

The image frames processed by the camera 121 may be stored in the memory 160 or may be transmitted to an external device through the wireless communication unit 110. The mobile terminal 100 may include two or more cameras 121.

The microphone 123 may receive external sound signals during a call mode, a recording mode, or a voice recognition mode with the use of a microphone and may convert the sound signals into electrical sound data. In the call mode, the mobile communication module 113 may convert the electrical sound data into data that can be readily transmitted to a mobile communication base station and then output the data obtained by the conversion. The microphone 123 may use various noise removal algorithms to remove noise that may be generated during the reception of external sound signals.

The user input unit 130 may generate key input data based on user input for controlling the operation of the mobile terminal 100. The user input unit 130 may be implemented as a keypad, a dome switch, or a static pressure or capacitive touch pad which is capable of receiving a command or information by being pushed or touched by a user. Alternatively, the user input unit 130 may be implemented as a wheel, a jog dial or wheel, or a joystick capable of receiving a command or information by being rotated. Still alternatively, the user input unit 130 may be implemented as a finger mouse. In particular, if the user input unit 130 is implemented as a touch pad and forms a mutual layer structure with the display module 151, the user input unit 130 and the display module 151 may be collectively referred to as a touch screen.

The sensing unit 140 determines a current state of the mobile terminal 100 such as whether the mobile terminal 100 is opened up or closed, the position of the mobile terminal 100 and whether the mobile terminal 100 is placed in contact with a user, and generates a sensing signal for controlling the operation of the mobile terminal 100. For example, when the mobile terminal 100 is a slider-type mobile phone, the sensing unit 140 may determine whether the mobile terminal 100 is opened up or closed. In addition, the sensing unit 140 may determine whether the mobile terminal 100 is powered by the power supply unit 190 and whether the interface unit 170 is connected to an external device.

The sensing unit 140 may include a detection sensor 141, a pressure sensor 143 and a motion sensor 145. The detection sensor 141 may determine whether there is an object nearby and approaching the mobile terminal 100 without any mechanical contact with the entity. More specifically, the detection sensor 141 may detect an object that is nearby and approaching by detecting a change in an alternating magnetic field or the rate of change of static capacitance. The sensing unit 140 may include two or more detection sensors 141.

The pressure sensor 143 may determine whether pressure is being applied to the mobile terminal 100 or may measure the level of pressure, if any, applied to the mobile terminal 100. The pressure sensor 143 may be installed in a certain part of the mobile terminal 100 where the detection of pressure is necessary. For example, the pressure sensor 143 may be installed in the display module 151. In this case, it is possible to differentiate a typical touch input from a pressure touch input, which is generated using a higher pressure level than that used to generate a typical touch input, based on data provided by the pressure sensor 143. In addition, when a pressure touch input is received through the display module 151, it is possible to determine the level of pressure applied to the display module 151 upon the detection of a pressure touch input based on data provided by the pressure sensor 143.
The motion sensor 145 may determine the location and motion of the mobile terminal 100 using an acceleration sensor or a gyro sensor.

In the meantime, acceleration sensors are a type of device for converting a vibration in acceleration into an electric signal. With recent developments in micro-electromechanical system (MEMS) technology, acceleration sensors have been widely used in various products for various purposes ranging from detecting large motions such as car collisions as performed in airbag systems for automobiles to detecting minute motions such as the motion of the hand as performed in gaming input devices. In general, one or more acceleration sensors representing two or three axial directions are incorporated into a single package. There are some cases when the detection of only one axial direction, for example, a Z-axis direction, is necessary. Thus, when an X- or Y-axis acceleration sensor, instead of a Z-axis acceleration sensor, is required, the X- or Y-axis acceleration sensor may be mounted on an additional substrate, and the additional substrate may be mounted on a main substrate.

Gyro sensors are sensors for measuring angular velocity, and may determine the relative direction of the rotation of the mobile terminal 100 to a reference direction. The output unit 150 may output audio signals, video signals and alarm signals. The output unit 150 may include the display module 151, an audio output module 153, an alarm module 155, and a haptic module 157.

The display module 151 may display various information processed by the mobile terminal 100. For example, if the mobile terminal 100 is in a call mode, the display module 151 may display a user interface (UI) or a graphic user interface (GUI) for making or receiving a call. If the mobile terminal 100 is in a video call mode or an image capturing mode, the display module 151 may display a UI or a GUI for capturing or receiving images.

If the display module 151 and the user input unit 130 form a layer structure together and are thus implemented as a touch screen, the display module 151 may be used as both an output device and an input device. If the display module 151 is implemented as a touch screen, the display module 151 may also include a touch screen panel and a touch screen panel controller. The touch screen panel is a transparent panel attached onto the exterior of the mobile terminal 100 and may be connected to an internal bus of the mobile terminal 100. The touch screen panel keeps monitoring whether the touch screen panel is being touched by the user. Once a touch input to the touch screen panel is received, the touch screen panel transmits a number of signals corresponding to the touch input to the touch screen panel controller. The touch screen panel controller processes the signals transmitted by the touch screen panel, and transmits the processed signals to the controller 180. Then, the controller 180 determines whether a touch input has been generated and which part of the touch screen panel has been touched based on the processed signals transmitted by the touch screen panel controller.

The display module 151 may include electronic paper (e-paper). E-paper is a type of reflective display technology and can provide as high resolution as ordinary ink on paper, wide viewing angles, and excellent visual properties. E-paper can be implemented on various types of substrates such as a plastic, metallic or paper substrate and can display and maintain an image thereon even after power is cut off. In addition, e-paper can reduce the power consumption of the mobile terminal 100 because it does not require a backlight assembly. The display module 151 may be implemented as e-paper by using electrostatic-charged hemispherical twist balls, using electrophoretic deposition, or using microcapsules.

The display module 151 may include at least one of a liquid crystal display (LCD), a thin film transistor (TFT)-LCD, an organic light-emitting diode (OLED), a flexible display, and a three-dimensional (3D) display. The mobile terminal 100 may include two or more display modules 151. For example, the mobile terminal 100 may include an external display module (not shown) and an internal display module (not shown).

The audio output module 153 may output audio data received by the wireless communication unit 110 during a call reception mode, a call mode, a recording mode, a voice recognition mode, or a broadcast reception mode or may output audio data present in the memory 160. In addition, the audio output module 153 may output various sound signals associated with the functions of the mobile terminal 100 such as receiving a call or a message. The audio output module 153 may include a speaker and a buzzer.

The alarm module 155 may output an alarm signal indicating the occurrence of an event in the mobile terminal 100. Examples of the event include receiving a call signal, receiving a message, and receiving a key signal. Examples of the alarm signal output by the alarm module 155 include an audio signal, a video signal and a vibration signal. More specifically, the alarm module 155 may output an alarm signal upon receiving a call signal or a message. In addition, the alarm module 155 may receive a key signal and may output an alarm signal as feedback to the key signal. Therefore, the user may be able to easily recognize the occurrence of an event based on an alarm signal output by the alarm module 155. An alarm signal for notifying the user of the occurrence of an event may be output not only by the alarm module 155 but also by the display module 151 or the audio output module 153.

The haptic module 157 may provide various haptic effects (such as vibration) that can be perceived by the user. If the haptic module 157 generates vibration as a haptic effect, the intensity and the pattern of vibration generated by the haptic module 157 may be altered in various manners. The haptic module 157 may synthesize different vibration effects and may output the result of the synthesization. Alternatively, the haptic module 157 may sequentially output different vibration effects.

The haptic module 157 may provide various haptic effects, other than vibration, such as a haptic effect obtained using a pin array that moves perpendicularly to a contact skin surface, a haptic effect obtained by injecting or sucking in air through an injection hole or a suction hole, a haptic effect obtained by giving a stimulus to the surface of the skin, a haptic effect obtained through contact with an electrode, a haptic effect obtained using an electrostatic force, and a haptic effect obtained by realizing the sense of heat or cold using a device capable of absorbing heat or generating heat. The haptic module 157 may be configured to enable the user to recognize a haptic effect using the kinesthetic sense of the fingers or the arms. The mobile terminal 100 may include two or more haptic modules 157.

The memory 160 may store various programs necessary for the operation of the controller 180. In addition, the memory 160 may temporarily store various data such as a phonebook, messages, still images, or moving images.

The memory 160 may include at least one of a flash memory type storage medium, a hard disk type storage medium, a multimedia card micro type storage medium, a card type memory (e.g., a secure digital (SD) or extreme digital (XD) memory), a random access memory (RAM), and a read-only memory (ROM). The mobile terminal 100 may operate a web storage, which performs the functions of the memory 160 on the internet.

The interface unit 170 may interface with an external device that can be connected to the mobile terminal 100. The interface unit 170 may be a wired/wireless headset, an external battery charger, a wired/wireless data port, a card socket for, for example, a memory card, a subscriber identification module (SIM) card or a user identity module (UIM) card, an audio input/output (I/O) terminal, a video I/O terminal, or an earphone. The interface unit 170 may receive data from an external device or may be powered by an external device. The interface unit 170 may transmit data provided by an external device to other components in the mobile terminal 100 or may transmit data provided by other components in the mobile terminal 100 to an external device.

When the mobile terminal 100 is connected to an external cradle, the interface unit 170 may provide a path for supplying power from the external cradle to the mobile terminal 100 or for transmitting various signals from the external cradle to the mobile terminal 100.

The controller 180 may control the general operation of the mobile terminal 100. For example, the controller 180 may perform various control operations regarding making/receiving a voice call, transmitting/receiving data, or making/receiving a video call. The controller 180 may include a multimedia player module 181, which plays multimedia data. The multimedia player module 181 may be implemented as a hardware device and may be installed in the controller 180. Alternatively, the multimedia player module 181 may be implemented as a software program.

The power supply unit 190 may be supplied with power by an external power source or an internal power source and may supply power to the other components in the mobile terminal 100.

The mobile terminal 100 may include a wired/wireless communication system or a satellite communication system and may thus be able to operate in a communication system capable of transmitting data in units of frames or packets.

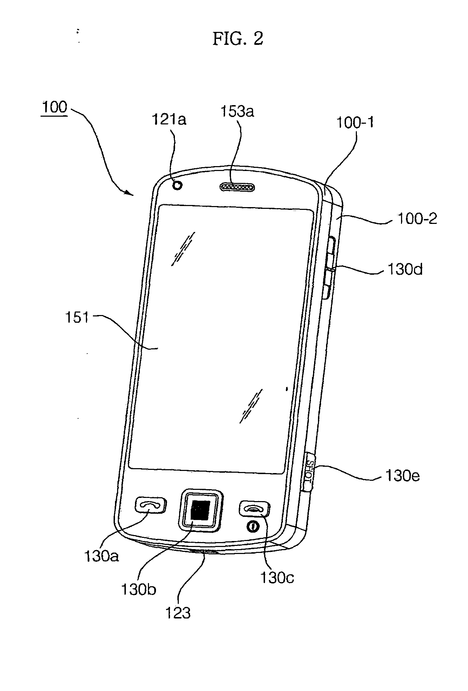

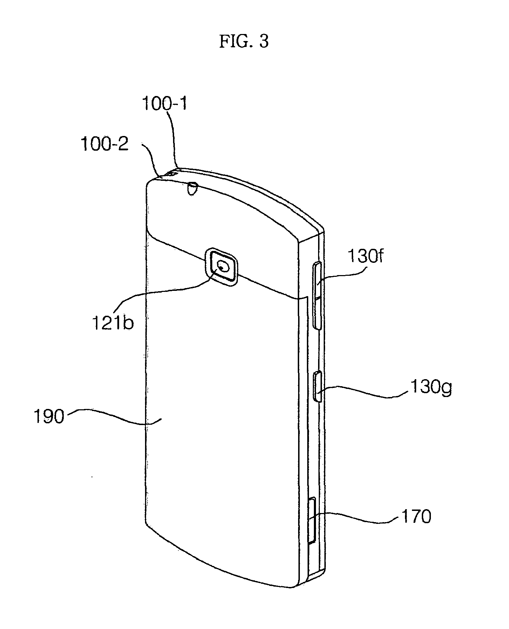

The exterior structure of the mobile terminal 100 will hereinafter be described in detail with reference to FIGS. 2 and 3. The present invention can be applied to nearly all types of mobile terminals such as a folder-type, a bar-type, a swing-type and a slider-type mobile terminal. However, for convenience, it is assumed that the mobile terminal 100 is a bar-type mobile terminal equipped with a full touch screen.

FIG. 2 is a front perspective view of the mobile terminal 100, and FIG. 3 is a rear perspective view of the mobile terminal 100. Referring to FIG. 2, the exterior of the mobile terminal 100 may be formed by a front case 100-1 and a rear case 100-2. Various electronic devices may be installed in the space formed by the front case 100-1 and the rear case 100-2. The front case 100-1 and the rear case 100-2 may be formed of a synthetic resin through injection molding. Alternatively, the front case 100-1 and the rear case 100-2 may be formed of a metal such as stainless steel (STS) or titanium (Ti).

The display module 151, a first audio output module 153a, a first camera 121a, and first through third user input modules 130a through 130c may be disposed in the main body of the mobile terminal 100, and particularly, on the front case 100-1. Fourth and fifth user input modules 130d and 130e and the microphone 123 may be disposed on one side of the rear case 100-2.

If a touch pad is configured to overlap the display module 151 and thus to form a mutual layer structure, the display module 151 may serve as a touch screen. Thus, the user can enter various information to the mobile terminal 100 simply by touching the display module 151.

The first audio output module 153a may be implemented as a receiver or a speaker. The first camera 121a may be configured to be suitable for capturing a still or moving image of the user. The microphone 123 may be configured to properly receive the user's voice or other sounds.

The first through fifth user input modules 130a through 130e and sixth and seventh user input modules 130f and 130g may be collectively referred to as the user input unit 130, and any means can be employed as the first through seventh user input modules 130a through 130f so long as it can operate in a tactile manner. For example, the user input unit 130 may be implemented as a dome switch or a touch pad that can receive a command or information according to a pressing or a touch operation by the user, or may be implemented as a wheel or jog type for rotating a key or as a joystick. In terms of function, the first through third user input modules 130a through 130c may operate as function keys for making or receiving a call, moving a mouse pointer, scrolling a display screen and entering a command such as start, end, or scroll, the fourth user input module 130d may operate as a function key for selecting an operating mode for the mobile terminal 100, and the fifth user input module 130e may operate as a hot key for activating a special function within the mobile terminal 100.

Referring to FIG. 3, a second camera 121b may be additionally provided at the rear of the rear case 100-2, and the sixth and seventh user input modules 130f and 130g and the interface unit 170 may be disposed on one side of the rear case 100-2.

The second camera 121b may have an image capture direction which is substantially the opposite to that of the first camera 121a, and may have a different resolution from that of the first camera 121a.

A flash and a mirror may be disposed to be adjacent to the second camera 121b. When an image of a subject is captured with the second camera 121b, the flash may illuminate the subject. The mirror may allow the user to see him- or herself when he or she wants to capture his or her own image by using the second camera 121b.

Another audio output module (not shown) may be additionally provided on the rear case 100-2. The audio output module on the rear case 100-2 may realize a stereo function along with the audio output module 153 on the front case 100-1. The audio output module on the rear case 100-2 may also be used in a speaker-phone mode.

The interface unit 170 may used as a passage allowing the mobile terminal 100 to exchange data with an external device either through a fixed line or wirelessly.

A broadcast signal reception antenna may be disposed at one side of the front or rear case 100-1 or 100-2, in addition to an antenna used for call communication. The broadcast signal reception antenna may be installed such that it can be extended from the front or rear case 100-1 or 100-2.

The power supply unit 190 may be mounted on the rear case 100-2 and may supply power to the mobile terminal 100. The power supply unit 190 may be, for example, a chargeable battery which can be detachably combined to the rear case 100-2 for being charged.

The second camera 121b and the other elements that have been described as being provided on the rear case 100-2 may be provided on the front case 100-1. In addition, the first camera 121a may be configured to be rotatable and thus to allow image capturing in various directions. In this case, the second camera 121b may be optional.

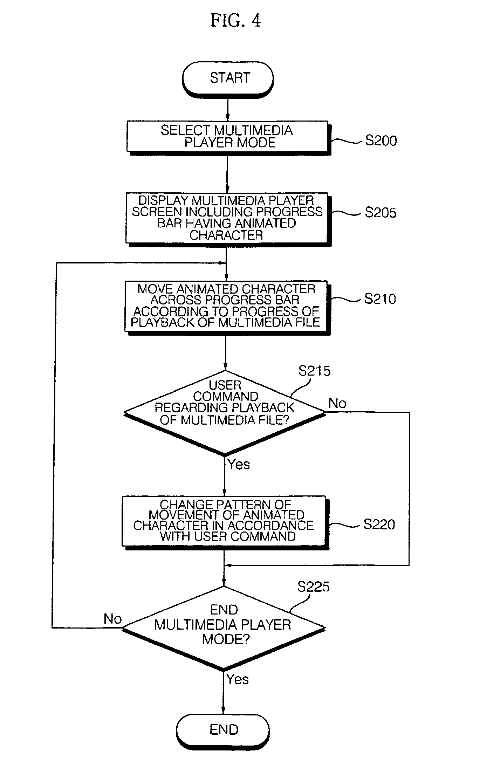

FIG. 4 is a flowchart of a method of controlling the operation of a mobile terminal, according to an exemplary embodiment of the present invention. Referring to FIG. 4, if a multimedia player mode, which is a mode for playing a music file or a video file, is selected in response to, for example, a user command (S200), the controller 180 may display a multimedia player screen including a progress bar having an animated character as a slider on the display module 151 (S205).

The animated character is an animated image of a person, an animal or an object, for example, an animated image of a person walking or running or of an animal walking, running or flying.

One of a number of images previously stored in the mobile terminal 100 may be used as the animated character. Alternatively, an image of a subject desired by a user may be captured using the camera 121, and the animated character may be created based on the captured image. For the setting of the animated character, the controller 180 may provide a separate menu.

Thereafter, the controller 180 may play a file selected by the user while moving the animated character in the progress bar according to the progress of the playback of the selected file (S210). That is, the animated character can indicate the current playback point and the remaining playback time.

If a user command for controlling the playback of the selected file, such as 'stop,' 'previous,' or 'next,' is received (S215), the controller 180 may control the playback of the selected file in accordance with the received user command, and may change the movement of the animated character accordingly (S220).

For example, an animated image of a person walking forward may be displayed as the animated character when the selected file is played at a normal speed, an animated image of a person running forward may be displayed as the animated character when the selected file is played at 2X speed, an animated image of a person running with sweat may be displayed as the animated character when the selected file is played at 4X speed, and an animated image of a person running so fast that his legs blur may be displayed as the animated character when the selected file is played at 8X speed. On the other hand, when the selected file is being rewound, an animated image of a person walking backward may be displayed as the animated character.

The movement of the animated character may be changed in connection with various other control operations than the control of the playback speed of a file, such as the control of brightness or sound volume.

Operations S210 through S220 may be repeatedly performed until the multimedia player mode is terminated (S225).

According to this exemplary embodiment, it is possible to effectively visualize the progress of the operation of the mobile terminal 100 by using an animated character.

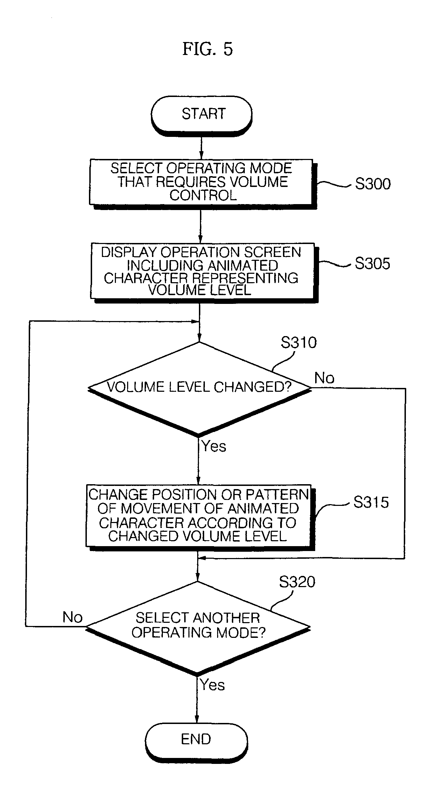

FIG. 5 is a flowchart of a method of controlling the operation of a mobile terminal, according to another exemplary embodiment of the present invention, and particularly, how to use an animated character in volume control. Referring to FIG. 5, if an operating mode such as a music player mode or a broadcast reception mode that requires volume control is selected (S300), the controller 180 may display an operation screen including an animated character representing a volume level on the display module 151 (S305). The animated character may be an animated image of a person or an animal moving in a particular manner. The volume level may be initially set to a default value.

If the volume level changes in response to, for example, a user input (S310), the controller 180 may perform volume control in accordance with the changed volume level, and may change the location of the animated character or the pattern of the movement of the animated character accordingly (S315).

For example, when the volume level is 0 or mute, an animated image of a person putting a finger to his mouth, making a 'shush' gesture may be displayed as the animated character. When the volume level is 1, an animated image of a person singing softly may be displayed as the animated character. When the volume level is 2, an animated image of a person singing loudly may be displayed as the animated character. When the volume level is 3, an animated image of a person shouting so loudly that his face becomes livid may be displayed as the animated character. Alternatively, an animated image of a person going up or down the stairs may be displayed as the animated character.

Operations S310 and S315 may be repeatedly performed until another operating mode is selected (S320).

According to this exemplary embodiment, it is possible to effectively visualize a current volume level by using an animated character.

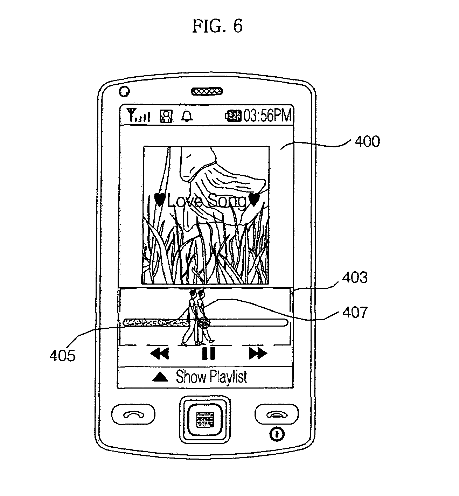

FIGS. 6 through 8 are diagrams illustrating examples of the use of an animated character in a multimedia player mode. Referring to FIG. 6, a progress bar 403 having an animated character 405 as a slider may be displayed on a multimedia player screen 400. The progress bar 403 may indicate the progress of the playback of multimedia data. That is, as the playback of multimedia data proceeds, the animated character 405 may be gradually moved from the left to the right across the progress bar 403. A plurality of buttons (such as 'previous,' 'stop,' and 'next' buttons) for controlling the playback of multimedia data may be provided below the progress bar 403.

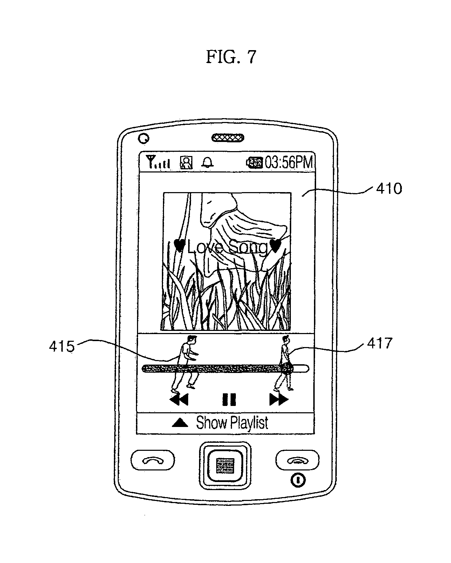

If the animated character 405 is dragged to the right, a blur image 407 of the animated character 405 may be displayed at the position where the animated character 405 is dragged, and the animated character 405 may be gradually moved in a 'forward walking' motion to the position where the blur image 407 is displayed. Referring to FIG. 7, when multimedia data currently being played on a multimedia player screen 410 is fast-forwarded quickly, an animated character 415 may be gradually moved in a 'forward running' motion to the position where a blur image 417 of the animated character 415 is displayed.

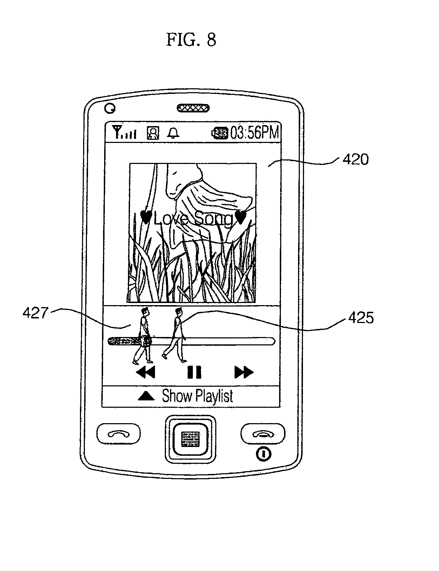

Referring to FIG. 8, when multimedia data currently being played on a multimedia player screen 420 is rewound, an animated character 425 may be gradually moved in a 'backward walking' motion to the position where a blur image 427 of the animated character 425 is displayed.

In this manner, it is possible to effectively indicate the progress of other various operations performed by the mobile terminal 100 than the playback of multimedia data by using various animated characters in various motions.

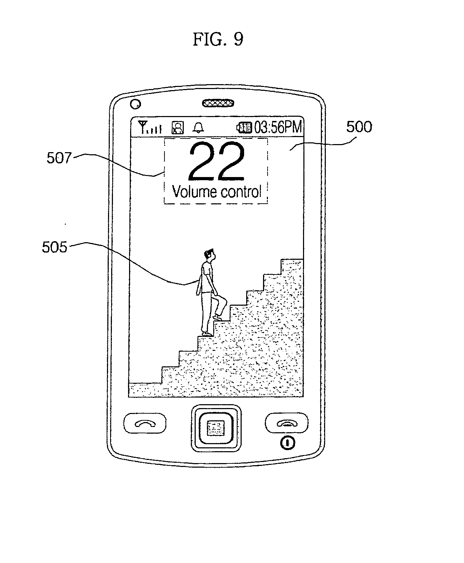

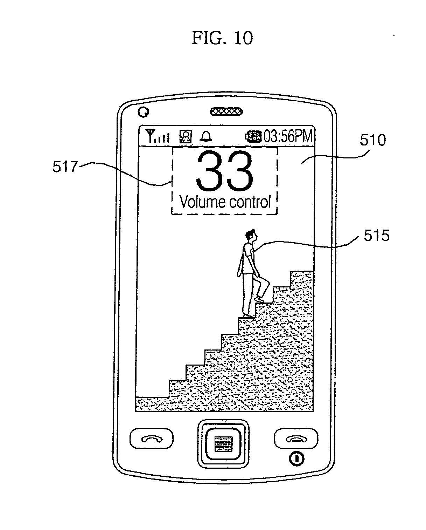

FIGS. 9 through 12 are diagrams illustrating examples of the use of an animated character in volume control. Referring to FIGS. 9 and 10, during volume control, an animated character 505 may be displayed on an operation screen 500, and may be gradually moved in the motion of walking up or down the stairs. A number indicating a current volume level may also be displayed on the operation screen 500, as indicated by reference numeral 507.

More specifically, referring to FIG. 10, when the volume level increases, an animated character 515 may be gradually moved in the motion of walking up the stairs, and the current increased volume level may be displayed, as indicated by reference numeral 517.

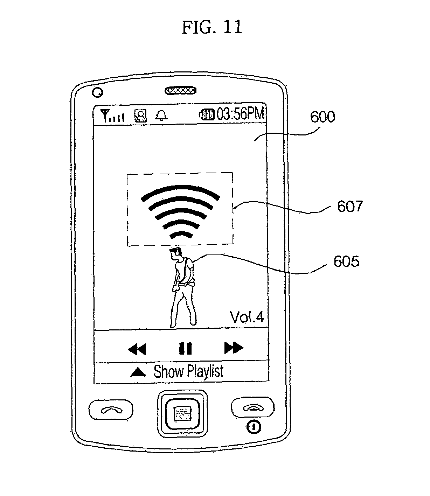

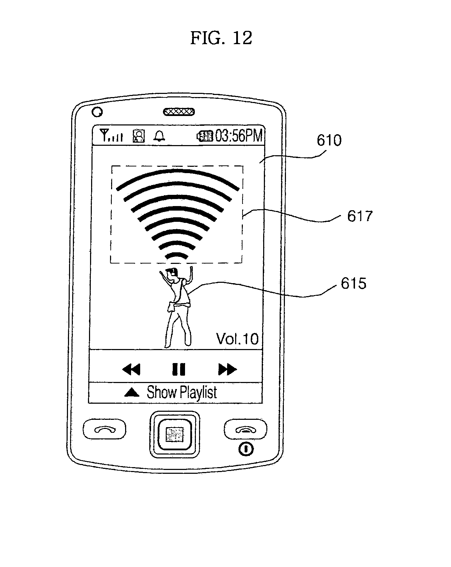

Referring to FIGS. 11 and 12, if a volume level increases when an animated image 605 of a person singing is displayed on an operation screen 600 as an animated character along with a symbol 607 indicating a current volume level, an operation screen 610 showing an animated image 615 of a person singing loudly as an animated character and a symbol 617 obtained by changing the size or shape of the symbol 607 according to the increased volume level may be displayed. Alternatively, the person may be dancing, with a dancing speed that varies with the current volume level.

In this manner, it is possible to effectively indicate the progress of other various operations performed by the mobile terminal 100 than volume control by using various animated characters in various motions.

According to the examples shown in FIGS. 6 through 12, an image created by a user may be used as an animated character. For example, an image of a person may be captured using a camera, and an animated character may be created based on the captured image.

The present invention can be realized as code that can be read by a processor included in a mobile terminal and that can be written on a computer-readable recording medium. The computer-readable recording medium may be any type of recording device in which data is stored in a computer-readable manner. Examples of the computer-readable recording medium include a ROM, a RAM, a CD-ROM, a magnetic tape, a floppy disc, an optical data storage, and a carrier wave (e.g., data transmission through the internet). The computer-readable recording medium can be distributed over a plurality of computer systems connected to a network so that computer-readable code is written thereto and executed therefrom in a decentralized manner. Functional programs, code, and code segments needed for realizing the present invention can be easily construed by one of ordinary skill in the art.

As described above, according to the present invention, it is possible to effectively indicate the progress of the playback of a multimedia file or a current volume level using an animated character. In addition, it is possible to help a user intuitively understand the progress of an operation performed by a mobile terminal. Moreover, it is possible to provide fun to a user by using an animated character. For example, all conceivable character animations may be used to effectively indicate the progress of the playback of a multimedia file or a current volume level. The animations may or may not be intuitively related to the progress or volume. The characters may be persons or animals. The animations may be drawings of real or imaginary characters or may be stored video clips of actual persons or animals.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A method of controlling an operation of a mobile terminal, the method comprising:
selecting, by the mobile terminal in response to a user selection command, a multimedia file to be played;
displaying, on a display module of the mobile terminal, a progress bar having an animated character; and
moving, by the mobile terminal, the animated character across the progress bar according to a progress of a playback of the selected multimedia file.

2. The method of claim 1, further comprising:
changing a movement pattern of the animated character in accordance with a user input regarding the playback of the selected multimedia file.

3. The method of claim 1, wherein the animated character is an animated human image.

4. The method of claim 1, further comprising:
creating, by the mobile terminal, the animated character using an image captured by a camera of the mobile terminal or captured by another camera.

5. The method of claim 1, further comprising:
providing, by the mobile terminal, a menu for setting the animated character.

6. A mobile terminal, comprising:
a display module configured to display an operation screen thereon; and
a controller operatively connected to the display module and configured to display a progress bar having an animated character on the display module upon a selection of a multimedia file to be played by the mobile terminal, and
move the animated character across the progress bar according to a progress of a playback of the multimedia file.

7. The mobile terminal of claim 6, wherein the controller is further configured to change a movement pattern of the animated character in accordance with a user input regarding the playback of the multimedia file.

8. The mobile terminal of claim 6, wherein the animated character is an animated human image.

9. A method of controlling the operation of a mobile terminal, the method comprising:
upon receiving a volume control command, displaying an operation screen on the mobile terminal for controlling a volume level of the mobile terminal;
displaying, on the operation screen, an animated character representing the volume level; and
changing, by the mobile terminal, at least one of a location of the animated character and a movement pattern of the animated character in accordance with a variation in the volume level.

10. The method of claim 9, further comprising:
displaying, on the operation screen, text indicating the volume level.

11. The method of claim 9, wherein the animated character is an animated human image.

12. A mobile terminal, comprising:
a display module; and
a controller operatively connected to the display module and configured to upon receiving a volume control command, display an operation screen on the display module for controlling a volume level of the mobile terminal,
display, on the operation screen, an animated character representing the volume level, and
change at least one of a location of the animated character and a movement pattern of the animated character in accordance with a variation in the volume level.

13. The mobile terminal of claim 12, further comprising:
an audio output module operatively connected to the controller and configured to output an audio signal corresponding to the variation in the volume level.

14. The mobile terminal of claim 13, wherein the controller is further configured to display text indicating the volume level.

15. The mobile terminal of claim 13, wherein the animated character is an animated human image.
